# EUROPEAN PATENT SPECIFICATION

(11) **EP 1 373 424 B1**
(45) Date of publication and mention of the grant of the patent: **24.06.2009**
(21) Application number: 02718820.0
(22) Date of filing: 08.01.2002
(51) Int. Cl.: C09J 7/02

(54) **ADHESIVE LAYERS AND RELEASE LINERS WITH PYRAMIDAL STRUCTURES**
KLEBE- UND TRENNSCHICHTEN MIT PYRAMIDALEN STRUKTUREN
COUCHES ADHESIVES ET REVETEMENTS AMOVIBLES A STRUCTURES PYRAMIDALES

(30) Priority: 14.03.2001 US 808636
(43) Date of publication of application: 02.01.2004
(73) Proprietor: 3M Innovative Properties Company, St. Paul MN 55133-3427 (US)
(72) Inventor: FLEMING, Danny L., Saint Paul, MN 55133-3427 (US); SHER, Frank, T., Saint Paul, MN 55133-3427 (US)
(74) Representative: Vossius & Partner
(86) International application number: PCT/US2002/000648
(87) International publication number: WO 2002/074877

(56) References cited:
- WO-A-00/69985
- WO-A-02/14447
- WO-A-93/03107

## Description

### TECHNICAL FIELD

This invention relates to articles that include a structured adhesive layer. The adhesive layers have modified surface geometry that enhances fluid egress when the article is applied to a substrate. The corresponding surface geometry of an optional release liner adjacent the adhesive layer allows handling tapes to more readily adhere to the liner as the article is adhered to the substrate.

### BACKGROUND

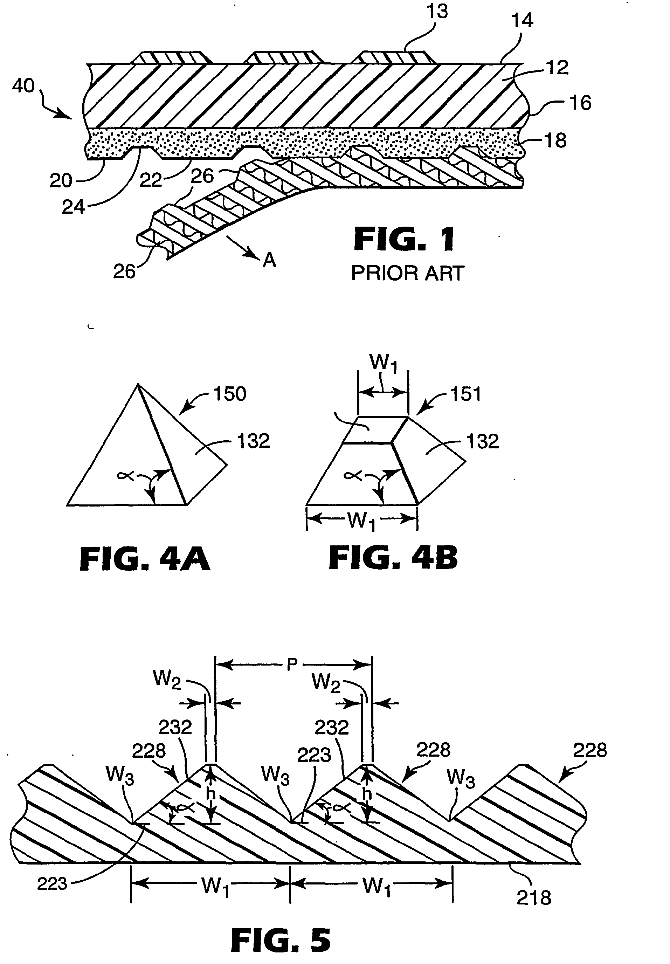

The adhesive backed graphic articles described in U.S. Patent No. 5,897,930, WO 98/29516, WO 00/69985, and U.S. Serial Nos. 09/311,101, 09/638,346 and 09/639,244 include an adhesive layer with a plurality of recessed interconnecting microchannels. A typical article 10 of this type is shown in Fig. 1, and includes a film 12 having opposed surfaces 14 and 16. The surface 14 of the film 12 is imaged to form a graphic 13. A layer of a pressure sensitive adhesive 18 is bonded to the surface 16 of the film 12. The pressure sensitive adhesive 18 includes a surface 20 that can be bonded to a substrate. The pressure sensitive adhesive 18 includes structures 22 that define a network of channels 24. A release liner 26 is releasably attached to the pressure sensitive adhesive 18. The release liner 26 includes protrusions 28 that form the corresponding channels 24 and structures 22 in the pressure sensitive adhesive 18. The release liner 26, shown in a partially removed state, is fully detachable when pulled in the direction of arrow A and is used to protect the pressure sensitive adhesive prior to application of the article 10 on a substrate.

The geometry and spacing of the protrusions 28 on the release liner 26 should be selected to reduce or prevent fluid entrapment beneath the adhesive as it is rapidly coated onto the release liner during manufacture. The entrapped air can degrade the performance of the coated adhesive layer and reduce the appearance and printability of the film layer, particularly for high-resolution images. Defects caused by the entrapped air detract from the overall appearance of products based on the adhesive backed articles, and the reduced coating speeds required to prevent air entrapment increase production costs.

The shape of the protrusions 28 in the release liner 26 and the corresponding channels 24 in the adhesive layer 18 should be selected to maintain the appearance of the article following adhesion to a substrate, and to allow egress of fluids trapped under the article as it is positioned on and applied to a substrate. Fluid egress allows the adhesive backed article to be repositioned and smoothly applied to the substrate.

If a release liner includes a network of continuous ridges spaced closely together (See 28 in Fig. 1), only a relatively small surface area on the tops of the ridges is available for bonding to a pre-mask, a pre-space, or a splicing tape. The closely spaced ridges also make it more difficult for the tapes to contact and adhere to the relatively flat land areas between the ridges. The shape and spacing of the protrusions 28 should be selected such that pre-mask, pre-space or splicing tapes adhere sufficiently to the release liner to allow transfer of the graphic article into proper registration with a substrate.

One network of structures is a regular pattern of square pyramidal depressions in the release liner or raised protrusions in a corresponding coated adhesive layer. The pyramids have a nominal sidewall angle of 10 degrees with respect to a plane of the release liner or adhesive layer, and a depth in the release liner or height above the adhesive layer of up to about 15 microns. The resulting adhesive layer has insufficient fluid egress at room temperature, and this insufficiency is particularly acute when the adhesive layer is applied to a substrate at an elevated temperature. Application of adhesive backed conformable film articles under typical conditions, using a plastic squeegee at room temperature and up to 40° C and higher, can result in excessive deformation of the pyramidal structure as the adhesive layer is pressed against the substrate. This deformation prematurely blocks the routes of fluid egress through the adhesive layer, which results in fluid entrapment, bubble formation and insufficient application performance.

### SUMMARY

The release liners of the invention include recessed structures that create mirror image protruding structures on an adjacent adhesive layer. The recessed structures on the release liner are shaped and spaced to provide enhanced coatability and adhesion to handling tapes. The corresponding protruding structures on the adhesive layer are shaped and spaced to provide improved fluid egress when the adhesive layer is adhered to a substrate, particularly at high temperatures, and do not compromise the appearance of the final article.

In a first embodiment, the invention is a release liner as defined in claim 1 having a surface with an array of pyramidal depressions thereon. The pyramidal depressions are capable of adhering to a handling tape at rate of greater than 10g per 5cm (2 inch) width, as measured by a Handling Tape to Liner Peel Adhesion Test described herein. The pyramidal depressions extend downward from a plane of the surface of the release liner to a depth of greater than 15 microns and less than 35 microns. The pyramidal depressions have at least one sidewall that makes an angle of 10° to 17° with respect to the plane of the surface of the release liner.

In a second embodiment, the invention is an adhesive backed article as defined in claim 8 that includes a release liner having a surface with pyramidal depressions thereon. The depressions extend downward from a plane of the surface of the release liner to a depth of greater than 15 microns and less than 35 microns, and have at least gne sidewall that makes an angle of 10° to 17° with respect to the plane of the surface. The adhesive backed article further includes an adhesive layer on the surface of the release liner.

In a third embodiment, the invention is an adhesive layer as defined in claim 10 with an array of pyramidal protrusions thereon. The pyramidal protrusions are capable of providing fluid egress of greater than 20 ml/min at 23°C at a pressure of 100 cm (40 inches) of water, and greater than 10 ml/min at 35 °C at a pressure of 100cm (40 inches) of water, as measured according to the Air Flow Test described herein. The protrusions extend upward from a plane of the surface to a height of greater than 15 microns and less than 35 microns. The protrusions have at least one sidewall that makes an angle of 10° to 17° with respect to the plane of the surface.

In a fourth embodiment, the invention is a graphic article as defined in claim 12 having an adhesive layer with a surface including pyramidal protrusions. The protrusions extend upward from a plane of the surface to a height of greater than 15 microns and less than 35 microns, and the protrusions have at least one sidewall that makes an angle of 10° to 17° with respect to the plane of the surface. The graphic article further includes a imageable film on a surface of the adhesive layer. The graphic article may include an optional release liner on a surface of the adhesive layer opposite the film.

In a fifth embodiment, the invention is a method for contacting the graphic article with a substrate as defined in claim 14. The method includes providing a graphic article having an adhesive layer with a surface with pyramidal protrusions thereon. The protrusions extend upward from a plane of the surface to a height of greater than 15 microns and less than 35 microns, and have at least one sidewall that makes an angle of 10° to 17° with respect to the plane of the surface. The graphic article includes an imageable film on a surface of the adhesive layer. The adhesive layer is contacted with a substrate.

In a sixth embodiment, the invention is a method of transferring a graphic article as defined in claim 15. The method includes providing a graphic article including a film with a first surface and a second surface, wherein an image occupies at least a portion of the first surface, an adhesive layer on the second surface of the film, and a release liner on the adhesive layer. The release liner has a surface with pyramidal depressions thereon. The depressions extend downward from a plane of the surface of the release liner to a depth of greater than 15 microns and less than 35 microns, and have at least one sidewall that makes an angle of 10° to 17° with respect to the plane of the surface of the release liner. The method further includes removing the film and the adhesive layer under portions of the first surface not occupied by the image such that at least a portion of the surface of the release liner is exposed, attaching a handling tape to the image and the exposed portion of the release liner; and transferring the article into registration with a substrate. In an optional additional step, the handling film is removed from the substrate and the graphic article.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG 1 is a cross-sectional view of a conventional adhesive-backed graphic article;
FIG. 2 is a perspective view of a release liner suitable for forming a structured surface in an adhesive layer,
FIG. 3 is a perspective view of a structured surface adhesive layer formed on the release liner of FIG. 2;
FIG. 4a is a perspective view of one embodiment of a protrusion on an adhesive layer according to the invention;
FIG 4b is a perspective view of one embodiment of a truncated protrusion on an adhesive layer according to the invention;
FIG. 5 is a cross-sectional view along line A-A of FIG. 3 showing the dimensions of a protrusion on an adhesive layer according to the invention;
FIG. 6A is a cross-sectional view of a graphic article as it is initially contacted with a substrate;
FIG. 6B is a cross-sectional view of a graphic article after adequate adhesion to a substrate has been achieved;
FIG 7 is a cross-sectional view of the adhesive backed article of Fig. 6 with portions of the film layer and adhesive layer cut away to expose the release liner; and
FIG. 8 is a cross-sectional view of the adhesive backed article of Fig. 7 with a second protective or transfer film applied thereto.

Like reference symbols in the various drawings indicate like elements.

### DETAILED DESCRIPTION

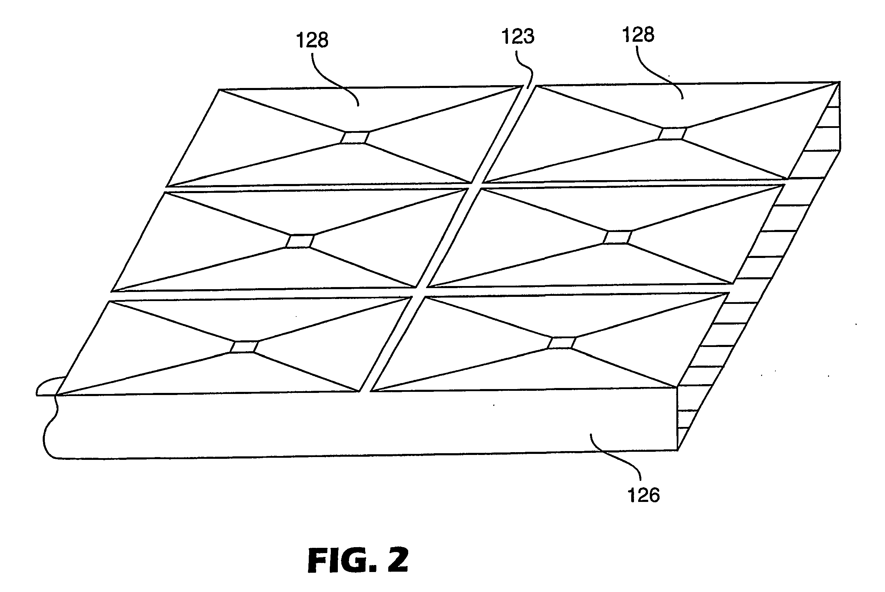

Referring to Fig. 2, a removable release liner 126 includes pyramidal depressions 128 that extend below a plane 123 of the release liner. The depressions 128 in the liner 126 may be made as described in WO 98/29516 and U.S. Patent No. 5,650,215. The topography may be created in the liner 126 by any contacting technique, such as casting, coating or compressing. The topography may be made by at least one of: (1) casting the liner on a tool with an embossed pattern, (2) coating the liner onto a tool with an embossed pattern, or (3) passing the liner through a nip roll to compress the liner against a tool with an embossed pattern. The topography of the tool used to create the embossed pattern in the release liner 126 may be made using any known technique, such as, for example, chemical etching, mechanical etching, laser ablation, photolithography, stereolithography, micromachining, knurling, cutting or scoring.

The liner 126 may be any release liner or transfer liner known to those skilled in the art that is capable of being embossed as described above. The liner 126 should also be capable of being placed in intimate contact with a pressure sensitive adhesive and subsequently removed without damaging the adhesive layer. Non-limiting examples of liners include materials from Minnesota Mining & Manufacturing Company (3M) of St. Paul, MN, Rexam Corporation of Iowa City, IA, or Daubert Coated Products of Westchester, IL. The liner 126 is typically a polymer coated paper with a silicone release coating, a polyethylene coated polyethylene terepthalate (PET) film with silicone release coatings, or a cast polypropylene film with a silicone release coating. The liner 126 may also include structures designed to enhance the positionability of the adhesive article such as, for example, the glass beads in products available from 3M under the trade designation Controltac.

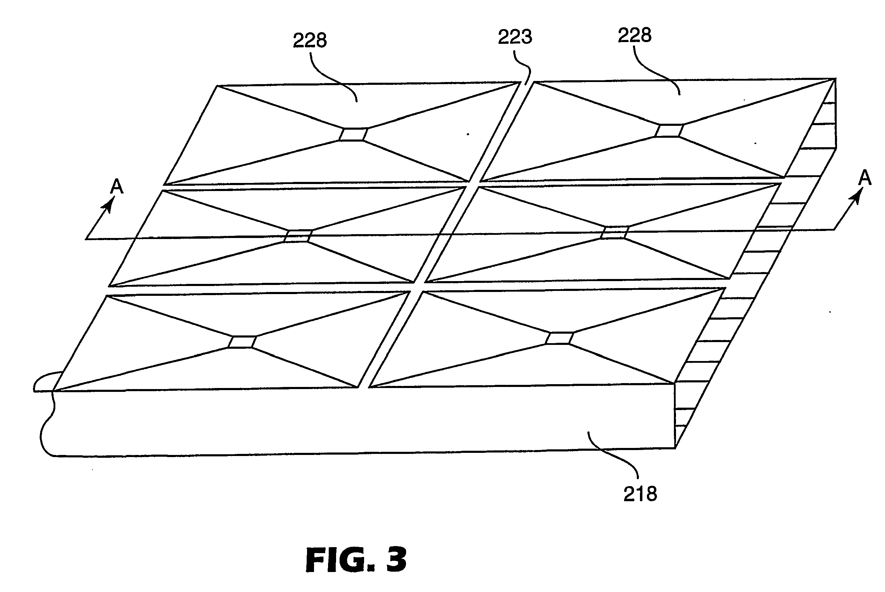

An adhesive layer may be coated and/or laminated on the embossed release liner 126 shown in Fig. 2. When the release liner 126 is removed, the surface of the adhesive layer has a topography that is essentially the reverse of the topography of the surface of the release liner 126. The resulting adhesive layer 218, which is shown in Fig. 3, includes pyramidal protrusions 228 corresponding to the pyramidal depressions 128 in the release liner 126. The pyramidal protrusions 228 extend upward from a plane 223 of the adhesive layer. The adhesive layer may optionally include additional non-adhesive structures such as, for example, those described in U.S. Patent Nos. 5,296,277; 5,362,516; and 5,141,790. These non-adhesive structures are available from 3M. St. Paul, MN, under the trade designation Controltac.

The pyramidal protrusions 228 on the adhesive layer 218 (and the corresponding depressions on the release liner 128) are preferably microscopic in at least two dimensions, i.e. the topical and/or cross-sectional view is microscopic. The term microscopic as used herein refers to dimensions that cannot be resolved by the human eye without aid of a microscope. The pyramidal protrusions/depressions may be present in either a random array or in regular patterns. Selected patterns could include rectilinear patterns, polar patterns and other conventional regular patterns.

The shape of the pyramidal protrusions 228 extending upward from a plane of the surface of the adhesive layer 218 (and the corresponding depressions 128 extending downward from the plane of the release liner 126) can vary widely depending on the intended application of the adhesive layer 218. Right pyramids, trigonal pyramids, square pyramids, and quadrangle pyramids are particularly preferred. The pyramidal structures may have pointed or truncated tops, and combinations of the different pyramidal shapes can be utilized.

In the release liner, the pyramidal depressions are capable of adhering to a handling tapes at rate of greater than about 10g per 2 inch (5cm) width, as measured by a Handling Tape to Liner Peel Adhesion Test described herein. Low tape to liner adhesions, for example less than 10 g / 2 inch (5 cm) width, can result in the tape curling up off of the liner or falling off of the liner without extreme handling precautions.

In the adhesive layer, the pyramidal protrusions are capable of providing fluid egress of greater than about 20 ml/min, preferably greater than about 30 ml/min, at 23°C under a pressure of 100cm (40 inches) of water, and greater than about 10 ml/min, preferably greater than about 20 ml/min, at 35 °C under a pressure of 100 cm (40 inches) of water, as measured according to the Air Flow Test described herein. In the release liner 126, the pyramidal depressions are capable of adhering to a handling tape at a rate of greater than about 10g per 2 inch width, preferably greater than about 20 g per 5cm (2 inch) width, and most preferably greater than about 50g per 5 cm (2 inch) width, as measured by a Handling Tape to Liner Peel Adhesion Test described herein.

Fig.4A illustrates a quadrangle pyramid 150 as an illustration of one embodiment suitable for use as a protrusion 228 in the adhesive layer 218. Fig.4B depicts a truncated quadrangle pyramid 151 that may also be used as a protrusion in the adhesive layer 218.

The protrusions 228 in the adhesive layer 218 (and the corresponding depressions in the release liner 126) are preferably arranged in a regular array. The regular array either terminates at the peripheral portion of the adhesive layer 218 (or the liner 126) or communicates with other structures that terminate at a peripheral portion thereof. The term regular array refers to a regular repeating pattern over at least a portion of the surface of the adhesive layer (or release liner), preferably over the entire surface.

As described in WO 98/295,116, the pyramidal protrusions 228 (See Fig. 3) should be sized according to the following general design considerations. First, the protrusions should preferably be sufficiently large to allow egress of fluids to the periphery of the adhesive layer for exhaustion into the surrounding atmosphere, but not so large as to allow ingress of unwanted fluids beneath the adhesive layer. Second, the protrusions 228 should also not be so large as to detract from the appearance of an exposed surface of a film adhered to the adhesive layer, particularly if the film is to be imaged. Third, the protrusions 228 should not be so large as to detract from the adhesive bonding performance of the adhesive layer.

Referring to Fig. 5, a section of the adhesive layer 218 along line A-A (Fig. 3) is shown that includes a plurality of protrusions 228 extending above the plane 223 of the adhesive layer. The dimensions of the protrusions may vary widely depending on the intended application of the adhesive layer and the release liner, and should be selected to provide adequate balance between adhesion to substrate, fluid egress, and adhesion of the corresponding depressions in the release liner to handling tapes. The pitch P between the protrusion 228 may be up to about 400 µm, preferably about 150 µm to about 350 µm. The height h of each protrusion 228 from a plane 223 of the adhesive layer 218 is preferably greater than about 15 µm and up to about 35 µm, more preferably about 17 µm to about 30 µm. The width W₁ of the protrusion 228 at its base is typically greater than about 150 µm. The distance W₂ may vary widely depending on the balance of adhesion to substrate, fluid egress and release liner handling tape adhesion, and should typically be less than about 50% of the width of the base W₁. Preferably, W₂ is about 0 µm (pointed top) to about 20 µm (truncated), more preferably about 2 µm to about 5 µm. The gap W₃ between the pyramidal protrusions 228 is preferably about 0 µm to about 10 µm, more preferably about 2 µm to about 6 µm The protrusions 228 have at least one sidewall 232 that makes an angle α with respect to a plane 223 of the surface of the adhesive layer 218. The angle α is about 10° to about 17°.

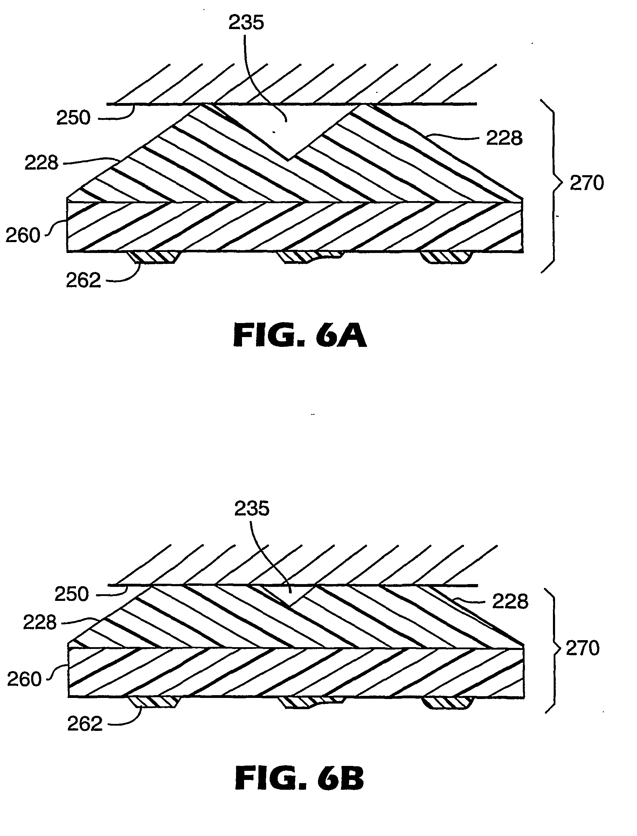

Referring to Figs. 6A and 6B, once the release liner 126 (not shown in Fig. 6) is removed, the exposed surface of the structured adhesive layer 218 may be adhered to a variety of substrates 250. The surface of the adhesive layer opposite the structured surface typically includes a film layer 260, which includes an image layer 262. Referring to Fig. 6A, as the adhesive layer 218 is initially contacted with the substrate 250, the pyramidal protrusions 228 contact the surface of the substrate, and the areas 235 between the protrusions 228 function as channels for fluid egress. This allows pockets of trapped air between the adhesive layer and the substrate to be easily removed. Referring to Fig. 6B, after adequate application consistent with techniques known in the art, increase adhesive wet-out will occur and the areas 235 will decrease in size or disappear completely. Examples of suitable substrates 250 include glass, metal, plastic, wood, and ceramic substrates, painted surfaces of these substrates, imaged films, sign faces, and the like. Representative plastic substrates include polyvinyl chloride, ethylene-propylene-diene monomer rubber, polyurethanes, polymethyl methacrylate, engineering thermoplastics (e.g., polyphenylene oxide, polyetheretherketone, polycarbonate), and thermoplastic elastomers.

Referring again to Fig. 6, the film 260 may vary widely depending on the intended application, and may be made of a wide variety of materials such as, for example, polymers, metal foils, metal plates, ceramic plates, foamed sheets, and reflective sheeting. The film 260 is preferably made of a polymeric material used conventionally by those skilled in the art. Suitable polymeric films include, for example, vinyl, polyvinyl chloride, plasticized polyvinyl chloride, polyurethane, polyethylene, polypropylene, fluororesin and the like. The thickness of the film 260 can vary widely according to a desired application, but is usually about 300 µm or less, and preferably about 25 µm to about 100 µm.

Any pressure-sensitive adhesive is suitable for the adhesive layer 218. Classes of pressure-sensitive adhesives include acrylics, tackified rubber, tackified synthetic rubber, ethylene vinyl acetate, silicone, and the like. Suitable acrylic adhesives are disclosed, for example, in U.S. Patent Nos. 3,239,478, 3,935,338, 5,169,727, RE 24,906, 4,952,650, and 4,181,752. A suitable class of pressure-sensitive adhesives is the reaction product of at least one alkyl acrylate with at least one reinforcing comonomer. Suitable alkyl acrylates are those having a homopolymer glass transition temperature below about -10°C and include, for example, n-butyl acrylate, 2-ethylhexylacrylate, isoctylacrylate, isononyl acrylate, octadecyl acrylate and the like. Suitable reinforcing monomers include, for example, acrylic acid, itaconic acid, isobornyl acrylate, N,N-dimethylacrylamide, N-vinyl caprolactam, N-vinyl pyrrolidone, and the like.

The adhesive composition and rheology of the adhesive layer 218 should be selected to provide the desired degree of wet-out between the adhesive layer 218 and the substrate 250, as well as the retention of the fluid egress channels 235. The adhesives may be polymers that are dispersed in solvent or water and coated onto the release liner and dried, and optionally crosslinked. If a solvent borne or water borne pressure-sensitive adhesive composition is employed, then the adhesive layer may undergo a drying step to remove all or a majority of the carrier liquid. Additional coating steps may be necessary to achieve a smooth surface. The adhesives may also be hot melt coated onto the liner or microstructured backing. Additionally, monomeric pre-adhesive compositions can be coated onto the liner and polymerized with an energy source such as heat, UV radiation, e-beam radiation, and the like. The thickness of the adhesive may vary widely depending on the intended application, and typically ranges from about 10 µm to about 50 µm.

The pressure sensitive adhesive can optionally include one or more additives such as, for example, initiators, fillers, plasticizers, tackifiers, chain transfer agents, fibrous reinforcing agents, woven and non-woven fabrics, foaming agents, antioxidants, stabilizers, fire retardants, viscosity enhancing agents, coloring agents, and mixtures thereof.

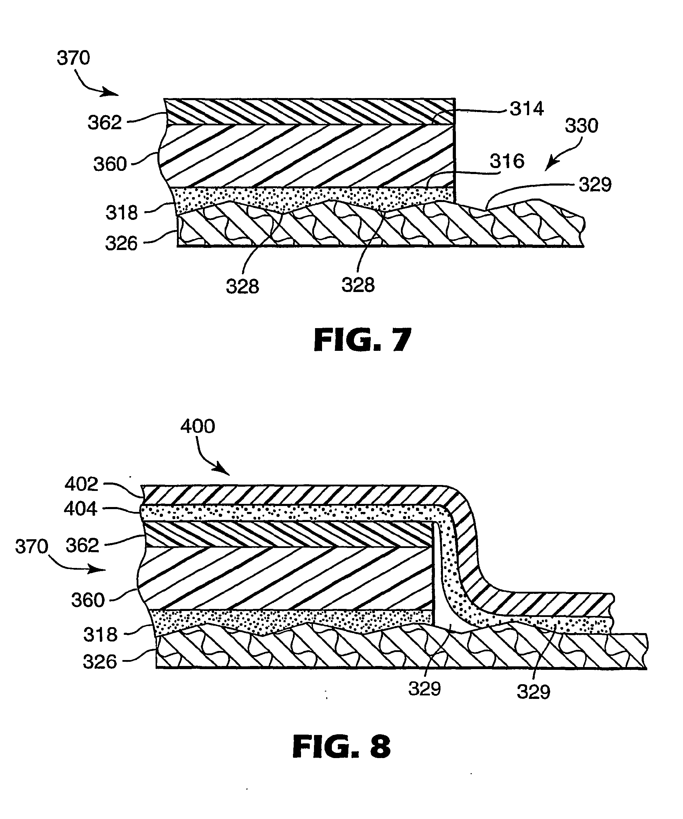

Referring to Fig. 7, a graphic article 370 is shown that includes a graphic 362 imaged on a first surface 314 of a film layer 360. A second surface 316 of the film layer 360 lies adjacent to the structured adhesives layer 318. The adhesive layer 318 includes pyramidal protrusions 328. The adhesive layer 318 is protected by a removable structured release liner 316, which includes depressions 329 corresponding to the protrusions 328. In Fig. 7, the film layer 362 and the adhesive layer 318 have been carefully cut away around the graphic 362. The area of the film 362 and adhesive 318 not overlain by the graphic 362 have been removed to expose a portion 330 of the structured surface of the release liner 326.

As shown in Fig. 8, once the film and adhesive not overlain by the graphic 362 are removed, a second tape 400 may be applied over the graphic 362 and/or the release liner 326. The tape 400 may be used to protect the graphic 362 from damage during handling, or may be a pre-mask or pre-space tape to facilitate transfer and registration of the construction 370 with respect to a substrate. The tape 400 may also be a splicing tape used to temporarily join the release liner 326 to another release liner (not shown in Fig. 8). Generally, the tape 400 includes a film layer 402 and an adhesive layer 404. The tape 400 may also include other layers depending on its intended function, and these layers will not be detailed here. When the tape 400 contacts the release liner 326, the film layer 402 is typically sufficiently stiff that the tape adhesive layer 404 cannot completely conform to the topography of the release liner 326. This results in insufficient adhesion between the tape 400 and the release liner 326. The shape and spacing of the depressions 329 in the release liner 326 are selected to enhance adhesion between the release liner 326 and the handling tape 400.

The invention will now be described with reference to the following non-limiting examples.

### EXAMPLES

### Sample Analyses:

Liner and adhesive samples were evaluated using light microscopy with a JENA JENAVERT (Jena, Germany) incident light microscope or Bausch and Lomb stereo microscope (Bausch & Lomb, Rochester, NY), or interferometry microscopy using a WYKO RST surface profiler (WYKO Corp., Tucson, AZ).

### Tests:

Handling Tape to Liner Peel Adhesion Test: Two inch wide strips of 3M SCPS-55 5 application tape are adhered to the release or microstructured face of the liners by lamination at 60 psi using a roll laminator (Robert L. Greig, Inc.) having 3inch (7.6 cm) diameter by 32 inch (81 cm) wide 60D durometer rollers and 5/8" (1.6 cm) diameter rams. After one hour dwell in a constant temperature and humidity room at 22°C and 50% relative humidity, the tapes are peeled at a constant 180° angle from the laminated samples using an IMASS adhesion tester set for a rate of 90 inches/minute. The tape to liner adhesion measurement may be reported in grams per inch width or grams per two inch width.

Graphic to Substrate Peel Adhesion Test : Adhesion tests of the graphics to substrates are a modification of ASTM method D3330 (1992) and Pressure Sensitive Tape Council method PSTC-1 (1989). Painted aluminum test panels (Fruehauf, Indianapolis, IN) are cleaned with a solvent available from E.I. DuPont de Nemours, Wilmington, DE, under the trade designation PrepSol, and allowed to dry. Samples of pressure sensitive adhesive and film on liner are cut into 2.54 cm wide strips. The release liner is removed, and the strips are applied to the panels using a PA-1 Hand Applicator (available from 3M, St. Paul MN) with an applied mass of 450 grams at a speed of about 2.5 centimeter/second. A backing strip of 2.54 cm wide adhesive film available from 3M under the trade designation Scotchcal Series 3650 is laminated in registration onto each sample strip. The backing film prevents the sample films and pressure sensitive adhesive from excessively stretching during peel back testing. After 24 hours in a constant temperature and humidity room (CTH) at 22°C and 50% relative humidity or after 7 days at 66°C followed by 24 hour equilibration in the constant temperature and humidity room, peel adhesion is measured as a 90° peel back at a crosshead speed of 30.5 centimeters per minute using a Instron 5564 tensile tester (Instron Corp., Canton, MA).

Indent Panel Test: A circular indent is made in 0.7 mm thick aluminum test panel using a hemispherical drop hammer with a tip diameter of 2.5 cm. For the panel used, the indent was about 2.8 cm diameter at the plane of the panel and was about 0.6 cm deep. A 7.5 cm by 7.5 cm test sample to be tested is centered over the indent and applied flat onto the panel and taut over the indent A PA-1 Hand Applicator with a protective sleeve (SA-1, available from 3M) is used to press the sample onto the panel using a mass of about 1 kg. Then the film is pressed with a thumb into the depressed indent. At least 3 kg of mass is applied. The ability of the sample to conform into the indent and uniformly contact the depressed panel indent is rated as follows:
0 sample would not conform significantly into the indent against the entrapped air
1 sample could be pressed down into the indent to the extent of about 50%
2 sample could be pressed down to conform with much of the indent leaving small air bubbles
3 sample could be pressed down to conform slowly (greater than 5 seconds) and completely into indent
4 sample could be pressed down to conform swiftly (less than 5 seconds) and completely into the indent

Samples having flat or finely roughened pressure sensitive adhesive surfaces typically have a rating of 0.

Rivet Panel Test: A test sample is manually pressed over a 12 mm diameter by 2.5 mm high rounded rivet onto a riveted Fruehauf flat panel by starting at the edges of the sample 3.8 cm from the center of the rivet. The sample is pressed down, using both thumbs, with thumb pressure (approximately 750 g for each thumb) at the periphery using a circular motion to entrap a large air pocket under the film. The film is then pressed in at the edge of the air pocket towards the rivet keeping thumbs at opposite sides of the rivet and making half-circular motions in alternating directions with decreasing radii to keep the thumbs along the margin of the pocket (approximately 750g for each thumb). The force is limited so as not to burst the film. This procedure ensures that a large air pocket is formed under the sample and is prevented from being pushed under the film, to the sample edge, by de-bonding of the pressure sensitive adhesive. The time required for dissipating the air pocket and conforming the film to within 2 mm of the rivet is determined. If a large air pocket remains after 5 minutes of working the film, the diameter of the air pocket is determined. A range may be reported for repeat testing. Samples with best air dissipation generally require less than about 30 to 60 seconds to conform the film up to the rivet. Samples requiring greater than 2 minutes up to 5 minutes to conform the film up to the rivet generally have air flow that may be too restricted for some applications. Poorest samples entrap about a 35 mm (or larger) air pocket after 5 minutes of working application. Samples having flat or finely roughened pressure sensitive adhesive surfaces typically leave a large air pocket. Hot Application/Reapplication Test: A horizontal glass plate is heated to 40-43 °C and cleaned with methyl ethyl ketone (MEK). A piece of the pressure sensitive adhesive sheet to be tested, approximately 2.5 cm by 7.5 cm, is draped flat onto the glass plate with the pressure sensitive adhesive side down for approximately 10 seconds, and the edges are pressed with a finger with approximately 500 g "force" to uniformly contact the periphery (from the edge to about 0.5 cm inward) to the glass plate. The sample is then pressed by a finger around the periphery and toward the center of the sample to prevent the PSA from debonding and prevent the entire air pocket from moving to the edge of the sample. The sample applied in this fashion is then evaluated for presence or absence of trapped bubbles. The strip is slowly peeled off of the stage and reapplied in the same procedure. A third reapplication is also done. The test ratings are as follows:
0 sample showed trapped bubbles after the first application (indicating no detectable air release properties)
1 sample did not show bubbles after the first application, but did show after either the second or third reapplication
2 sample did not show bubbles after the second application, but did show after the third reapplication
3 no bubbles were observed on any of the three application and reapplications (showing air release properties for the first application and showing retention of air release properties for the subsequent reapplications). Also, the channels in the pressure sensitive adhesive layer may still be present even after the third removal step.

Materials having a rating of 3 are considered to be excellent. Materials having a rating of 0 are considered to be poor. Materials having a rating of 1 show air bleed that are too low for consistent applications and reapplications onto surfaces at elevated temperatures. Samples having flat or finely roughened pressure sensitive adhesive surfaces typically have a rating of 0.

### Air Flow Test

The ability of a structured article to provide air bleed (also referred to as air flow) after application to a substrate is measured in the following manner. The test fixture is a stainless steel substrate having machined therein two circular concentric channels, one inside the other. The two circles have a radius of 2.0 inches (5.1 cm) and 2.5 inches (6.4 cm) respectively, and the channels of each are 0.030 inches (0.76 mm) wide and 0.060 inches (1.52 mm) deep. Each channel has a pair of openings, measuring 0.03 inches (0.76 mm) in diameter and spaced about 0.25 inches (0.64 cm) apart from each other. The openings in the inner channel are connected to a pressure source and the openings in the outer groove/channel are connected to an air flow measurement device. A sample is applied to cover the concentric grooves using a 7.6cm (3 inch) wide 5.1cm (2.4 inch) diameter, 1235g rubber roller with a hardness of 60A durometer. A pressure of 0-250cm (0-100 inches) of water is applied to the inner channel through the openings therein and the flow of air out through the openings in the outer channel is measured. The air flow is reported in milliliters/minute.

### Percent Wetout and Channel Sealing Test:

A sample of the pressure sensitive adhesive sheet is carefully laid, adhesive side down, onto a clear, smooth, flat acrylic panel. A felt pad attached to the end of a handle is used to apply pressure to the surface of the sample. The sample area is larger than the felt pad. The felt pad has a 15 mm radius. The handle is held by hand, and the pad is pressed onto the sample surface in the same spot using a force of 497 g for 10 seconds. The wetout area of the adhesive is determined using microscopy. The extent of channel sealing is also determined by microscopy.

### Examples 1, 3 and 4 and Comparative Examples 2, 5, and C1 to C6:

Release liners were microembossed to form patterns of recessed cells on the front side surface. The liners generally had a 125 micron paper core, a 25 micron polyethylene coating with a matte finish on the back side, a 25 micron polyethylene coating with a glossy finish on the front side, and a commercial silicone coating on the glossy polyethylene side. Each set of patterns was formed under heat and pressure using an engraved embossing tool. Each engraved pattern was an array of regularly spaced inverted square pyramidal cells with the walls of the cells oriented at a 45° bias to the vertical direction of the web. Table 1 shows the dimensions of each pattern for Examples 1, 3 and 4 and Comparative Examples 2, 5, and C1 to C4.

Other comparative examples C5 and C6 had patterns of continuous intersecting parallel raised ridges in grids oriented at a 45° bias to the direction of the web. The slopes of the sidewalls of the ridges were about 54°. The cross-sections of the ridges were trapezoids. The trapezoidal ridges of Example C5 had a base width of about 43 microns, a top width of about 11 microns, and a height of about 22 microns. The pitch was about 290 microns. The trapezoidal ridges of Example C6 had a base width of about 41 microns, a top width of about 12 microns, and a height of about 20 microns. The pitch was about 203 microns.

The patterns of all of the samples were virtually undetectable when viewed at a distance of 10 inches (25 cm) with the unaided eye.

**TABLE 1**

| **Example** | **Height (depth)** | **Nominal Sidewall Slope from plane** | **Pitch (repeat distance)** | **Gap between pyramidal structures** | **Tops of pyramids** |
|---|---|---|---|---|---|
| | (microns) | (degrees) | (microns) | (microns) | (microns) |
| C1 | 10 | 15 | 82.7 | 6 | 2 |
| C2 | 10 | 40 | 31.8 | 6 | 2 |
| C3 | 15 | 8.5 | 197 | 0 | 0 |
| C4 | 15 | 27.5 | 65.6 | 6 | 2 |
| 1 | 20 | 15 | 157 | 6 | 2 |
| 2 | 20 | 40 | 55.7 | 6 | 2 |
| 3 | 25 | 10 | 292 | 6 | 2 |
| 4 | 25 | 15 | 195 | 6 | 2 |
| 5 | 25 | 20 | 145 | 6 | 2 |

### Examples 6-10 and Comparative Examples C7-C12:

An acrylic pressure sensitive adhesive solution (described as Adhesive Solution 1 in US Patent 5,296,277) was modified with 18.5 phr of a resin available under the trade designation Nirez 2019 from Arizona Chemical Co. The adhesive solution was coated onto the release liners of Examples 1-5 and C1-C6 and dried at 66°C for 10 minutes to form an adhesive film about 32 microns thick. The exposed adhesive side of these samples were laminated at room temperature to a 46 micron thick plasticized, white flexible and conformable vinyl (PVC) film identical to that used in film constructions available from 3M under the trade designation Controltac Plus Graphic Marking Film Series 180-10. The lamination used a Vanquisher roll laminator (Stoughton Machine and Manufacturing Co., Inc., Stoughton Wisconsin) at 200 kPa (30 psi) gauge pressure and a speed of about 2.5 cm/second to afford an essentially flat construction. Removal of the liner exposed essentially an inverse topography in the continuous adhesive layer. The topography was regularly spaced raised square pyramidal protrusions.

The patterns of all of the samples were virtually undetectable when viewed at a distance of 10 inches with the unaided eye.

The adhesive-backed films were evaluated using the Indent Panel Test, the Rivet Panel Test, the Hot Application/Reapplication Test, and the Air Flow Test. The Air Flow Test was run at 23° and at 35°C with an air pressure of 40 inches of water. The liners were subjected to the Tape to Liner Peel Adhesion Test. The results are tabulated in Table 2. The results showed a range of application and air bleed performance for the graphics and a range of adhesions of handling tape to liner. The examples show that the best results for all tests are achieved only within a range of a combination of pyramid heights (depths) and sidewall slopes. Of the samples prepared, samples that tested for poorer application air bleed properties had pyramid heights of about 10 microns with sidewall angles ranging from 15 to 40 degrees or pyramid heights of about 15 microns with a sidewall slope of less than about 10 degrees. Handling tape adhesion to the liners having the pyramidal features improved with lower sidewall slopes and lower depths of the pyramidal depressions.

**TABLE 2**

| **Example** | **Liner Sample (Example number)** | **Handling Tape to Liner Peel Adhesion Test (g / 2" width)** | **Indent Panel Test** | **Rivet Panel Test** | **Hot Application / Reapplication Test** | **Air Flow Test at 23°C** | **Air Flow Test at 35°C** |
|---|---|---|---|---|---|---|---|
| C7 | C1 | 70 | 1 | 37 mm air pocket after 5 minutes | 0 | 3 | 0 |
| C8 | C2 | 40 | 1 | 34 mm after 5 minutes | 0 | 18 | 2 |
| C9 | C3 | 68 | 0-1 | 138 seconds on one try, 35 mm air pocket entrapped after 5 min. on another try | 1 | 8-13 | 2 |
| C10 | C4 | 15 | 1 | 140 seconds | 1 | 35 | 8 |
| C11 | C5 | 0 | 4 | 15 5 | 3 | 49 | --- |
| C12 | C6 | 4 | 4 | 12 | 3 | >102 | --- |
| 6 | 1 | 55 | 3 | 26-30 seconds | 3 | 88 | 25 |
| 7 | 2 | 16 | 2 | 65 seconds | 3 | 96 | 28 |
| 8 | 3 | 70 | 4 | 13-20 seconds | 3 | 81 | 32 |
| 9 | 4 | 21 | 4 | 13-15 seconds | 3 | 102 | 42 |
| 10 | 5 | 11 | 4 | 15 seconds | 3 | 102 | 43 |

### Example 11:

A release liner having a structure similar to the liner of Example 1, but having a spacing of about 7 microns, a flat top of about 9-12 microns or more, a pitch of 190 microns and an approximate aspect ratio of 8.6 was prepared by microembossing. That liner and the liners of Comparative Examples C3, C5, and C6 were coated at speeds of 80 to 120 fpm using the adhesive of Examples 13-23. The liners of Example 1 and comparative Example C3 coated smoothly with little or no air bubbles entrapped or formed in the coating process. The coating of liners of comparative Examples C5 and C6 formed many entrapped air bubbles in the adhesive layer resulting in a bumpy adhesive surface.

### Examples 12 and 13 and Comparative Examples 14 and C13:

The samples of Examples 3, 4, and 5 were tested using the Graphic to Substrate Peel Adhesion Test.

An additional comparative sample C13 was prepared as in Examples 6-10 using a liner having a pattern of continuous intersecting parallel raised ridges in grids oriented at a 45° bias to the direction of the web. The slopes of the sidewalls of the ridges near the plane of the liner were about 90°. The ridges had a rounded cross-section shape with base width of about 90 microns and a height of at least 25 microns. The pitch was 1270 microns.

Table 3 shows that the constructions of the current invention show good bonding properties.

**TABLE 3**

| **Example** | **Sample (Example number)** | **Peel Adhesion after 24 hours CTH dwell (lb/in)** | **Peel Adhesion after 7 days 66°C dwell (lb/in)** |
|---|---|---|---|
| 12 | 3 | 1.8 | 3.9 |
| 13 | 4 | 1.8 | 4.2 |
| 14 | 5 | 1.9 | 4.5 |
| C13 | | 2.0 | 3.2 |

### Example 15-17 and Comparative Example C14:

Samples of Examples 8, 9, and 10 and Comparative Example C9 were tested with the Percent Wetout Test. Table 4 shows the results. The comparative example showed more wetout under the test conditions and sealing of the channel pathways that are needed for sufficient fluid exhaust during application processes.

**TABLE 4**

| **Example** | **Sample (Example number)** | **% Wetout** | **Fluid Exhaust Channels sealed** |
|---|---|---|---|
| C14 | C9 | 90 | Yes |
| 15 | 8 | 62 | No |
| 16 | 9 | 58 | No |
| 17 | 10 | 64 | No |

A number of embodiments of the invention have been described. Nevertheless, it will be understood that various modifications may be made without departing from the scope of the invention. Accordingly, other embodiments are within the scope of the following claims.

## Claims

1. A release liner (126; 326) with a surface comprising an array of pyramidal depressions (128; 329) thereon, wherein the release liner (126; 326) has a peel adhesion value of greater than 10g per 50.8mm (2 inch) width, as measured by a Handling Tape to Liner Peel Adhesion Test, wherein the depressions (128; 329) have a width (W₂) at the base that is less than 50% of the width (W₁) at the top of the depressions and wherein the liner (126; 326) further comprises non-adhesive structures to impart to an adhesive, wherein the depressions (128; 329) extend downward from a plane (123) of the surface of the release liner (126;316) to a depth (h) of greater than 15 microns and less than 35 microns, and wherein the depressions (128; 329) have at least one sidewall that makes an angle (α) with respect to the plane (123) of the surface of 10° to 17°.

2. The release liner of claim 1, wherein the depressions (128; 329) are truncated.

3. The release liner of claim 1, wherein the depressions (128; 329) have a depth (h) of greater than 20 microns.

4. The release liner of claim 1, wherein the depressions (128; 329) are separated by a gap (W₃) of 0 microns to 10 microns.

5. The release liner of claim 1, wherein the depressions (128; 329) are separated by a gap (W₃) of 5 microns to 10 microns.

6. The release liner of claim 1, therein the depressions (128; 329) form a substantially regular pattern on the surface.

7. The release liner of claim 1, wherein the depressions (128; 329) have a pitch (P) of up to 400 microns.

8. An adhesive backed article, comprising:
(a) a release liner (126; 326) with a surface comprising pyramidal depressions (128;329), wherein the depressions (128; 329) extend downward from a plane (123) of the surface of the release liner (126;326) to a depth (h) of greater than 15 microns and less than 35 microns, and wherein the depressions (128; 329) have at least one sidewall that makes an angle (α) of 10° to 17° with respect to the plane (123) of the surface, wherein the depressions (128; 329) have a width (W₃) at the base that is less than 50% of the width (W₁) at the top of the depressions (128; 329); and
(b) an adhesive layer (218,318) on the surface of the release liner (126; 326), said adhesive layer (218; 318) comprising non-adhesive structures.

9. The adhesive backed article of claim 8, wherein the adhesive layer (218; 318) has a fluid egress of greater than 20 ml/min at 23°C under a pressure of 101.6cm (40 inches) of water, and greater than 10 ml/min at 35 °C under a pressure of 101.6 cm (40 inches) of water, as measured according to the Air Flow Test.

10. An adhesive layer (218,318) with an array of pyramidal protrusions (228; 328) thereon, wherein the adhesive layer (218; 318) has a fluid egress value of greater than 20 ml/min at 23°C at a pressure of 101.6cm (40 inches) of water, as measured according to the Air Flow Test wherein the protrusions (228; 328) have a width (W₂) at the top that is less than 50% of the width (W₁) at the base of the protrusions (228; 328) and wherein the adhesive layer (218,318) further comprises non-adhesive structures, wherein the protrusions (228; 328) extend upward from a plane (223) of the surface of the adhesive layer (218; 318) to a height (h) of greater than 15 microns and less than 35 microns, and wherein the protrusions (228, 328) preferably have at least one sidewall that makes an angle (α) of 10° to 17° with respect to the plane (223) of the surface.

11. The adhesive layer of claim 10, wherein the adhesive layer (218; 318) has a fluid egress value of greater than 10 ml/min at 35 °C at a pressure of 101.6cm (40 inches) of water, as measured according to the Air Flow Test.

12. A graphic article (270; 370) comprising:
(a) the adhesive layer (218; 318) of claim 10 ; and
(b) an imageable film (260; 360) on a surface of the adhesive layer (218; 318).

13. The graphic article of claim 12, further comprising a release liner (126; 326) on a surface of the adhesive layer (218; 318) opposite the film (260,360).

14. A method comprising:
(a) providing the graphic article (270; 370) of claim 12; and
(b) contacting the adhesive layer (218; 318) with a substrate (250).

15. A method of transferring a graphic article, comprising:
(c) providing the graphic article (270; 370) of claim 12;
(d) removing the film (260; 360) and the adhesive layer (218; 318) under portions of the first surface (314) not occupied by the image such that at least a portion (330) of the surface of the release liner (126; 326) is exposed;
(e) attaching a handling tape (400) to the image and the exposed portion (330) of the release liner (126; 326); and
(f) transferring the article (270; 370) into registration with a substrate.

16. The method of claim 15, wherein the handling tape (400) is selected from a pre-mask film, a pre-space film and a splicing film.

17. The method of claim 15, wherein the depressions (128; 329) form a substantially regular array on the surface.

18. The method of claim 15, further comprising the step of removing the handling tape (400) from the substrate and the graphic article (270; 370).

## Patentansprüche

1. Trennschicht (126; 326) mit einer Oberfläche aufweisend eine Anordnung pyramidaler Vertiefungen (128; 329) darauf, wobei die Trennschicht (126; 326) einen Schälwiderstandswert von größer als 10 g pro 50,8 mm (2 Inch) Breite hat, gemessen mit einem Schutzbandzur-Trennschicht-Schälwiderstandstest, wobei die Vertiefungen (128; 329) eine Breite (W₂) an der Basis haben, die weniger als 50% der Breite (W₁) oben an den Vertiefungen ist, und wobei die Trennschicht (126; 326) ferner klebfreie Strukturen zum Übermitteln an einen Klebstoff aufweist, wobei sich die Vertiefungen (128; 329) abwärts von einer Ebene (123) der Oberfläche der Trennschicht (126; 326) auf eine Tiefe (h) von mehr als 15 Mikron und weniger als 35 Mikron erstrecken, und wobei die Vertiefungen (128; 329) mindestens eine Seitenwand aufweisen, die in Bezug auf die Ebene (123) der Oberfläche einen Winkel (α) von 10° bis 17° bildet.

2. Trennschicht nach Anspruch 1, wobei die Vertiefungen (128; 329) kegelstumpfartig sind.

3. Trennschicht nach Anspruch 1, wobei die Vertiefungen (128; 329) eine Tiefe (h) von mehr als 20 Mikron aufweisen.

4. Trennschicht nach Anspruch 1, wobei die Vertiefungen (128; 329) durch einen Spalt (W₃) von 0 Mikron bis 10 Mikron voneinander getrennt sind.

5. Trennschicht nach Anspruch 1, wobei die Vertiefungen (128; 329) durch einen Spalt (W₃) von 5 Mikron bis 10 Mikron voneinander getrennt sind.

6. Trennschicht nach Anspruch 1, wobei die Vertiefungen (128; 329) ein im Wesentlichen regelmäßiges Muster auf der Oberfläche bilden.

7. Trennschicht nach Anspruch 1, wobei die Vertiefungen (128; 329) ein Abstandsmaß (P) von bis zu 400 Mikron haben.

8. Gegenstand mit Klebstoffunterseite, mit:
(a) einer Trennschicht (126; 326) mit einer Oberfläche aufweisend pyramidale Vertiefungen (128; 329), wobei sich die Vertiefungen (128; 329) abwärts von einer Ebene (123) der Oberfläche der Trennschicht (126; 326) auf eine Tiefe (h) von mehr als 15 Mikron und weniger als 35 Mikron erstrecken, und wobei die Vertiefungen (128; 329) mindestens eine Seitenwand aufweisen, die in Bezug auf die Ebene (123) der Oberfläche einen Winkel (α) von 10° bis 17° bildet, wobei die Vertiefungen (128; 329) eine Breite (W₂) an der Basis haben, die weniger als 50% der Breite (W₁) oben an den Vertiefungen (128; 329) ist; und
(b) einer Klebeschicht (218; 318) auf der Oberfläche der Trennschicht (126; 326), wobei die Klebeschicht (218; 318) klebfreie Strukturen aufweist.

9. Gegenstand mit Klebstoffunterseite nach Anspruch 8, wobei die Klebeschicht (218; 318) einen fluiden Ausgang von mehr als 20 ml/min bei 23°C unter einem Druck von 101,6 cm (40 Inch) Wasser und mehr als 10 ml/min bei 35°C unter einem Druck von 101,6 cm (40 Inch) Wasser aufweist, gemessen nach dem Luftstromtest.

10. Klebeschicht (218; 318) mit einer Anordnung pyramidaler Hervorhebungen (228; 328) darauf, wobei die Klebeschicht (218; 318) einen Fluider-Ausgang-Wert von mehr als 20 ml/min bei 23°C bei einem Druck von 101,6 cm (40 Inch) Wasser, gemessen nach dem Luftstromtest, aufweist, wobei die Hervorhebungen (228; 328) oben eine Breite (W₂) aufweisen, die weniger als 50% der Breite (W₁) an der Basis der Hervorhebungen (228; 328) ist, und wobei die Klebeschicht (218; 318) ferner klebfreie Strukturen aufweist, wobei sich die Hervorhebungen (228; 328) aufwärts von einer Ebene (223) der Oberfläche der Klebeschicht (218; 318) auf eine Höhe (h) von mehr als 15 Mikron und weniger als 35 Mikron erstrecken, und wobei die Hervorhebungen (228; 328) vorzugsweise mindestens eine Seitenwand aufweisen, die in Bezug auf die Ebene (223) der Oberfläche einen Winkel (α) von 10° bis 17° bildet.

11. Klebeschicht nach Anspruch 10, wobei die Klebeschicht (218; 318) einen Fluider-Ausgang-Wert von mehr als 10 ml/min bei 35°C bei einem Druck von 101,6 cm (40 Inch) Wasser, gemessen nach dem Luftstromtest, aufweist.

12. Graphischer Gegenstand (270; 370), mit
(a) der Klebeschicht (218; 318) nach Anspruch 10; und
(b) einer abbildbaren Folie (260; 360) auf einer Oberfläche der Klebeschicht (218; 318).

13. Graphischer Gegenstand nach Anspruch 12, ferner mit einer Trennschicht (126; 326) auf einer der Folie (260; 360) gegenüberliegenden Oberfläche der Klebeschicht (218; 318).

14. Verfahren mit:
(a) Bereitstellen des graphischen Gegenstands (270; 370) nach Anspruch 12; und
(b) Kontaktieren der Klebeschicht (218; 318) mit einem Substrat (250).

15. Verfahren des Übertragens eines graphischen Gegenstands, mit:
(a) Bereitstellen des graphischen Gegenstands (270; 370) nach Anspruch 12;
(b) Entfernen der Folie (260; 360) und der Klebeschicht (218; 318) unter Teilen der nicht von dem Bild belegten ersten Oberfläche (314), derart, dass mindestens ein Teil (330) der Oberfläche der Trennschicht (126; 326) freigelegt wird;
(c) Anbringen des Handhabungsbands (400) auf das Bild und den freigelegten Teil (330) der Trennschicht (126; 326); und
(d) Übertragen des Gegenstands (270; 370) in Register mit einem Substrat.

16. Verfahren nach Anspruch 15, wobei das Handhabungsband (400) ausgewählt ist aus einer Vormaskierfolie, einer Vorspationierfolie und einer Spleißfolie.

17. Verfahren nach Anspruch 15, wobei die Vertiefungen (128; 329) eine im Wesentlichen regelmäßige Anordnung auf der Oberfläche bilden.

18. Verfahren nach Anspruch 15, ferner aufweisend den Schritt des Entfernens des Handhabungsbands (400) von dem Substrat und dem graphischen Gegenstand (270; 370).

## Revendications

1. Revêtement amovible (126 ; 326) comportant une surface comprenant un ensemble de dépressions pyramidales (128 ; 329) situées sur le dessus, le revêtement amovible (126 ; 326) ayant une valeur de résistance au décollement supérieure à 10 g par 50,8 mm (2 pouces) de largeur, mesurée par un Essai de résistance au décollement d'un ruban de manipulation adhérant à un revêtement, les dépressions (128 ; 329) ayant une largeur (W₂) à la base qui est inférieure à 50 % de la largeur (W₁) en haut des dépressions, et le revêtement (126 ; 326) comprenant en outre des structures non adhésives à transmettre à un adhésif, les dépressions (128 ; 329) s'étendant vers le bas à partir d'un plan (123) de la surface du revêtement amovible (126 ; 326) jusqu'à une profondeur (h) supérieure à 15 microns et inférieure à 35 microns, et les dépressions (128 ; 329) comportant au moins une paroi latérale qui forme un angle (α) de 10 ° à 17 ° par rapport au plan (123) de la surface.

2. Revêtement amovible selon la revendication 1, dans lequel les dépressions (128 ; 329) sont tronquées.

3. Revêtement amovible selon la revendication 1, dans lequel les dépressions (128 ; 329) ont une profondeur (h) supérieure à 20 microns.

4. Revêtement amovible selon la revendication 1, dans lequel les dépressions (128 ; 329) sont séparées par un intervalle (W₃) de 0 microns à 10 microns.

5. Revêtement amovible selon la revendication 1, dans lequel les dépressions (128 ; 329) sont séparées par un intervalle (W₃) de 5 microns à 10 microns.

6. Revêtement amovible selon la revendication 1, dans lequel les dépressions (128 ; 329) forment un motif fondamentalement régulier sur la surface.

7. Revêtement amovible selon la revendication 1, dans lequel les dépressions (128 ; 329) ont un écartement (P) jusqu'à 400 microns.

8. Article à dos adhésif, comprenant :
(a) un revêtement amovible (126 ; 326) comportant une surface comprenant des dépressions pyramidales (128 ; 329), les dépressions (128 ; 329) s'étendant vers le bas à partir d'un plan (123) de la surface du revêtement amovible (126 ; 326) jusqu'à une profondeur (h) supérieure à 15 microns et inférieure à 35 microns, et les dépressions (128 ; 329) comportant au moins une paroi latérale qui forme un angle (α) de 10 ° à 17 ° par rapport au plan (123) de la surface, les dépressions (128 ; 329) ayant une largeur (W₂) à la base qui est inférieure à 50 % de la largeur (W₁) en haut des dépressions (128 ; 329) ; et
(b) une couche adhésive (218 ; 318) sur la surface du revêtement amovible (126 ; 326), ladite couche adhésive (218 ; 318) comprenant des structures non adhésives.

9. Article à dos adhésif selon la revendication 8, dans lequel la couche adhésive (218 ; 318) a une valeur de sortie de fluide supérieure à 20 ml/min à 23 °C sous une pression de 101, 6 cm (40 pouces) d'eau, et supérieure à 10 ml/min à 35 °C sous une pression de 101,6 cm (40 pouces) d'eau, mesurée selon l'Essai d'écoulement d'air.

10. Couche adhésive (218 ; 318) comportant un ensemble de parties saillantes pyramidales (228 ; 328) situées sur le dessus, la couche adhésive (218 ; 318) ayant une valeur de sortie de fluide supérieure à 20 ml/min à 23 °C sous une pression de 101,6 cm (40 pouces) d'eau, mesurée selon l'Essai d'écoulement d'air, les parties saillantes (228 ; 328) ayant une largeur (W₂) en haut qui est inférieure à 50 % de la largeur (W₁) à la base des parties saillantes (228 ; 328) et la couche adhésive (218 ; 318) comprenant en outre des structures non adhésives, les parties saillantes (228 ; 328) s'étendant vers le haut à partir d'un plan (223) de la surface de la couche adhésive (218 ; 318) jusqu'à une hauteur (h) supérieure à 15 microns et inférieure à 35 microns, et les parties saillantes (228 ; 328) comportant préférablement au moins une paroi latérale qui forme un angle (α) de 10 ° à 17 ° par rapport au plan (223) de la surface.

11. Couche adhésive selon la revendication 10, la couche adhésive (218 ; 318) ayant une valeur de sortie de fluide supérieure à 10 ml/min à 35 °C sous une pression de 101,6 cm (40 pouces) d'eau, mesurée selon l'Essai d'écoulement d'air.

12. Article graphique (270 ; 370) comprenant :
(a) la couche adhésive (218 ; 318) selon la revendication 10 ; et
(b) un film capable de recevoir une image (260 ; 360) sur une surface de la couche adhésive (218 ; 318).

13. Article graphique selon la revendication 12, comprenant en outre un revêtement amovible (126 ; 326) sur une surface de la couche adhésive (218 ; 318) opposée au film (260 ; 360).

14. Méthode comprenant :
(a) la fourniture de l'article graphique (270 ; 370) selon la revendication 12 ; et
(b) la mise en contact de la couche adhésive (218 ; 318) avec un substrat (250).

15. Méthode de transfert d'un article graphique, comprenant :
(a) la fourniture de l'article graphique (270 ; 370) selon la revendication 12 ;
(b) le retrait du film (260 ; 360) et de la couche adhésive (218 ; 318) sous des parties de la première surface (314) non occupées par l'image, de sorte qu'au moins une partie (330) de la surface du revêtement amovible (126 ; 326) soit exposée ;
(c) la fixation d'un ruban de manipulation (400) sur l'image et sur la partie exposée (330) du revêtement amovible (126 ; 326) ; et
(d) le transfert de l'article (270 ; 370) en le positionnant par rapport à un substrat.

16. Méthode selon la revendication 15, dans laquelle le ruban de manipulation (400) est sélectionné parmi un film de prémasquage, un film de pré-espacement et un film de raccordement.

17. Méthode selon la revendication 15, dans laquelle les dépressions (128 ; 329) forment un ensemble fondamentalement régulier sur la surface.

18. Méthode selon la revendication 15, comprenant en outre l'étape consistant à retirer le ruban de manipulation (400) du substrat et de l'article graphique (270 ; 370).
